# EUROPEAN PATENT APPLICATION

(11) **EP 0 920 168 A2**
(43) Date of publication of application: **02.06.1999**
(21) Application number: 98122630.1
(22) Date of filing: 27.11.1998
(51) Int. Cl.: H04M 1/274

(54) **Speed dialing method and telephone apparatus**

(30) Priority: 27.11.1997 KR 9763406; 24.09.1998 KR 9839750
(71) Applicant: SAMSUNG ELECTRONICS CO., LTD., Suwon-City, Kyungki-do (KR)
(72) Inventor: Kim, Hoo-Ja, Seoul (KR); Son, Woo-Seock, Suwon-shi, Kyonggi-do (KR); Lee, Eun-Jung, Yongin-shi, Kyonggi-do (KR)
(74) Representative: Grünecker, Kinkeldey, Stockmair & Schwanhäusser Anwaltssozietät

(57) **Abstract**

A telephone searches a memory for a phone number having digits matching with a few digits, input by the user, of a phone number to be dialed, and then dials the searched phone number. When the user inputs N consecutive digits of the phone number to be dialed, the telephone searches the memory for phone numbers having N consecutive digits matching with the input digits, displays the searched phone numbers, and dialing one of the searched phone numbers, selected by the user through a user interface. The searched phone numbers are sorted in order of a dialing frequency or the latest call, and scrolled one by one.

## Description

### BACKGROUND OF THE INVENTION

### 1. Field of the Invention

The present invention relates to speed dialing (or abbreviated dialing) in a telephone, and in particular, to a device and method of searching a memory for a phone number matching with a phone number to be dialed by inputting only a few, not entire, digits of the phone number to be dialed, and then dialing the searched phone number.

### 2. Description of the Related Art

In general, a telephone, including a wired telephone and a mobile radio telephone, has a phone book function. With the assistance of this phone book function, a user can easily search for a desired phone number that he or she does not remember exactly. Conventionally, however, the user should input every digits of the phone number to dial the searched phone number, which is troublesome.

Further, the telephone may have a one-touch or two-touch dial function. In this case, the user should memorize the phone numbers registered in one-touch or two-touch keys.

To make a call from one mobile radio telephone to another mobile radio telephone without depending on the speed dialing, the user should press seven digits at least. Further, to make a call from the mobile radio telephone to a wired telephone, the user should press nine digits at least. Dialing such numerous digits is a nuisance.

### SUMMARY OF THE INVENTION

It is therefore an object of the present invention to provide a device and method of searching a memory for a phone number to be dialed by inputting only a few digits of the phone number to be dialed and then, dialing the searched phone number using a one-touch dial key.

According to one aspect of the present invention, a dialing device includes a user interface for inputting digits of a phone number to be dialed, selecting one of searched phone numbers and generating a dial command for dialing the selected phone number; a memory for storing at least one phone number; a controller for comparing each of the phone numbers stored in the memory with the input digits to search for the phone numbers having digits matching with the input digits; and a display for displaying the phone numbers searched by the controller.

According to another aspect of the resent invention, a dialing method in a telephone having a memory for storing phone numbers and a display includes the steps of inputting N consecutive digits of a phone number to be searched; searching the memory for phone numbers having N consecutive digits matching with the input digits; displaying the searched phone numbers on the display; and dialing one of the searched phone numbers, being selected through a user interface.

Further, the searched phone numbers are scrolled one by one, upon receiving a scroll command input from the user interface. Further, the searched phone numbers are sorted in order of a dialing frequency or the latest call.

### BRIEF DESCRIPTION OF THE DRAWINGS

The above and other objects, features and advantages of the present invention will become more apparent from the following detailed description when taken in conjunction with the accompanying drawings in which like reference numerals indicate like parts. In the drawings:
FIG. 1 is a block diagram of a mobile radio telephone to which the present invention is applicable;
FIG. 2A is a diagram illustrating a table structure of a phone number memory (54) of FIG. 1;
FIG. 2B is a diagram illustrating a structure of a call history table (55b) of FIG. 1;
FIG. 2C is a diagram illustrating a structure of a searched information table (55c) of FIG. 1;
FIG. 3 is a flowchart illustrating a dialing method according to an embodiment of the present invention;
FIG. 4 is a flowchart illustrating a call history table search subroutine (312) or a phone number memory search subroutine (313) of FIG. 3;
FIGs. 5A to 5D are diagrams for explaining how to search for a phone number according to an embodiment of the present invention;
FIG. 6 is a flowchart illustrating a dialing method according to another embodiment of the present invention; and
FIG. 7 is a flowchart illustrating a call history search subroutine (612) or a phone number memory search subroutine (613) of FIG. 6.

### DETAILED DESCRIPTION OF THE PREFERRED EMBODIMENT

A preferred embodiment of the present invention will be described hereinbelow with reference to the accompanying drawings. In the following description, well known functions or constructions are not described in detail since they would obscure the invention in unnecessary detail.

In the specification, a term "digits" refers to numerals constituting a phone number. For example, a phone number "745-1083" includes digits 7, 4, 5, 1, 0, 8 and 3, wherein the order of the digits is meaningless. Further, a term "partial digits" refers to, for example, two or three consecutive digits "45" or "510", or the last four digits "1083" of the phone number.

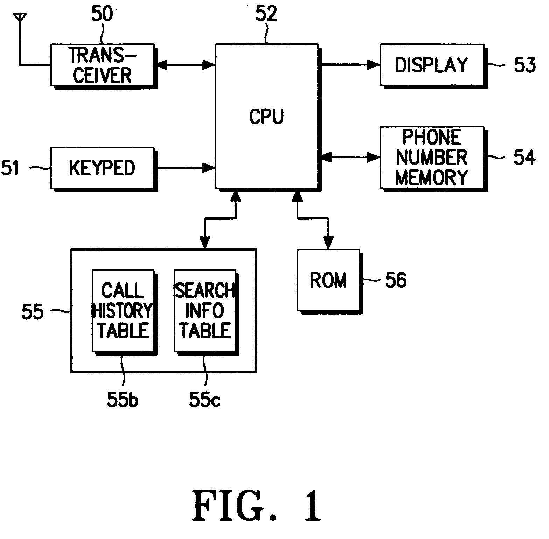

FIG. 1 illustrates a block diagram of a mobile radio telephone to which the present invention is applied, wherein the telephone searches for a phone number by utilizing partial digits, input by the user, of the phone number. In the drawing, a transceiver 50 processes radio transmission and reception signals. A keypad 51, being a user interface, includes a plurality of numeric keys for inputting the digits of a phone number to be dialed, a selection key for selecting the searched phone number and generating a dial command, and a scroll key for scrolling, when several phone numbers are searched, the searched phone numbers one by one. A CPU (Central Processing Unit) 52 searches a memory for the phone numbers including the digits input by the user. A display 53 displays the phone numbers searched by the CPU 52, wherein the digits input by the user are ordinarily displayed while the rest of the digits may be blinked or reversed. The memory includes a phone number memory 54 and a RAM (Random Access Memory) 55. The phone number memory 54, being an EEPROM (Electrically Erasable and Programmable Read Only Memory), includes a plurality of phone numbers registered by the user. The RAM 55 includes a call history table 55b where the previously called phone numbers are stored: and a searched information table 55c where the phone numbers searched by consulting the phone number memory 54 and the call history table 55b are stored. A ROM (Read Only Memory) 56 stores a control program for the CPU 52.

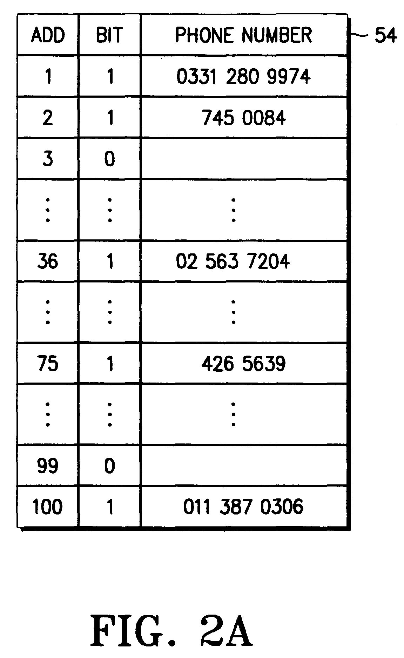

FIG. 2A illustrates a map of the phone number memory 54 according to an embodiment of the present invention. In the exemplary embodiment, the phone number memory 54 can store 100 phone numbers in maximum. Here, it is assumed that five phone numbers are stored in the phone number memory 54. As illustrated, the phone number memory 54 has a storage area for a phone number existence bit indicating whether a phone number is stored in a corresponding address. For example, a phone number "0331-280-9974" is stored in an address 1, so that the phone number existence bit is set to "1". However, since the phone number memory 54 has no phone number stored at an address 3, a corresponding phone number existence bit is set to "0".

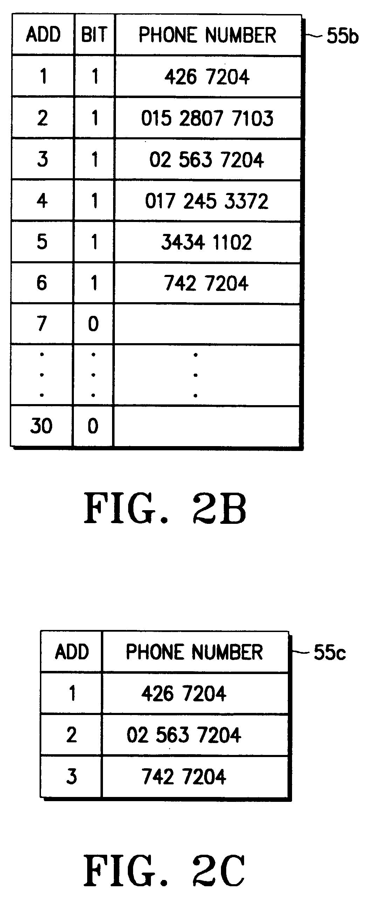

FIG. 2B illustrates a structure of the call history table 55b according to an embodiment of the present invention. In the call history table 55b, are stored the previously called phone numbers (i.e., the call history). In the embodiment, thirty phone numbers can be stored in the call history table 55b. FIG. 2B shows a state where six phone numbers are stored in the call history table 55b. Similarly, the call history table 55b also has a storage area for the phone number existence bit indicating whether a phone number is stored at a corresponding address.

FIG. 2C illustrates a structure of the searched information table 55c according to an embodiment of the present invention. In the searched information table 55c, are stored the phone numbers searched by consulting the phone number memory 54 and the call history table 55b. FIG. 2C shows that three searched phone numbers having the last four digits "7204" are stored in the searched information table 55c.

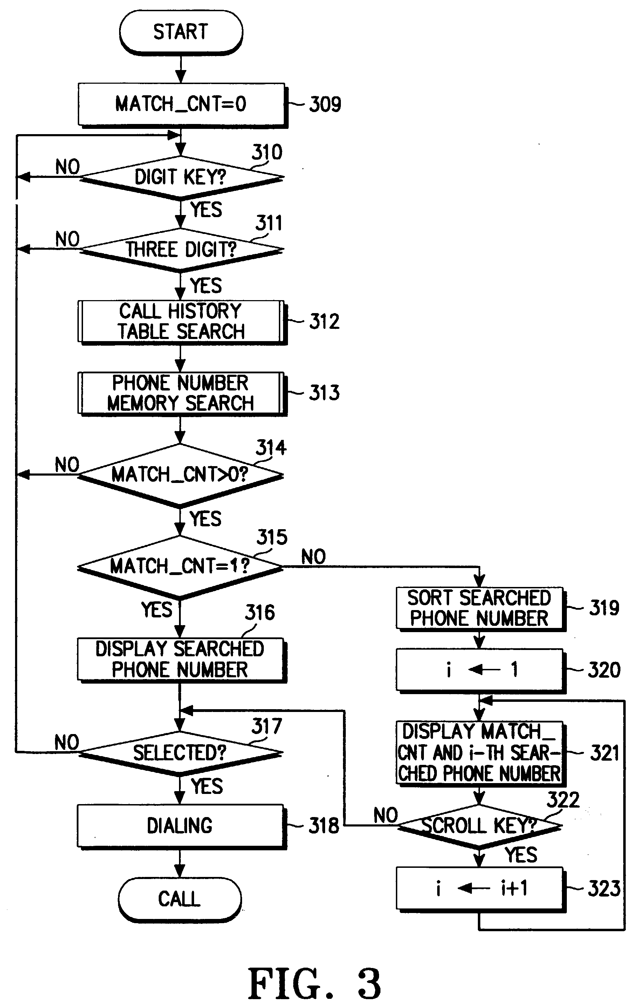

FIG. 3 is a flowchart illustrating a dialing method according to an embodiment of the present invention. In the embodiment, the phone numbers are compared with the input digits by three digits. However, it is also possible to compare the phone numbers with the input digits by a single digit or two digits.

In step 309, the CPU 52 initializes a variable MATCH_CNT indicating the number of the searched phone numbers to 0, and then checks in step 310 whether a digit key is input (pressed) or not. If the digit key is input, the CPU 52 checks in step 311 whether three digits have been input in sequence. If not, the procedure returns to step 310 to receive the next digit. In the meantime, when the three digits are input, the CPU 52 searches in step 312 the call history table 55b for the phone numbers having three consecutive digits matching with the input three digits, and increases the variable MATCH_CNT by one each time the phone number having the three digits matching (or coinciding) with the input three digits is searched.

For example, in comparing a phone number "3434-1102" with three digits "563" that the user has input, the CPU 52 compares the input three digits "563" with three consecutive digits "343", "434", "341", "411", "110" and "102" of the phone number in sequence.

After searching the call history table 55b, the CPU 52 searches in step 313 the phone number memory 54 for the phone numbers having three consecutive digits matching with the input three digits, and increases the variable MATCH_CNT by one, each time the phone number having the three digits matching with the input three digits is searched.

After completion of the search, the CPU 52 checks in step 314 whether the variable MATCH_CNT is larger than 0. If the variable MATCH_CNT is larger than 0, the CPU 52 checks in step 315 whether the variable MATCH_CNT is 1. If so, since it is meant that one phone number is searched, the CPU 52 displays the searched phone number on the display 53 in step 316. In step 317, the CPU 52 scans the keypad 51 to check whether the user selects the displayed phone number. Here, in the wired telephone, the user selects the phone number by using a predetermined key; in a mobile radio telephone, the user selects the phone number by pressing a SEND key. If the user selects the displayed phone number, the CPU 52 then dials the selected phone number in step 318. However, when the variable MATCH_CNT is not greater than 0 in step 314 or when the user does not select the phone number in step 317, the procedure returns to step 310.

In step 315, if the variable MATCH_CNT is not equal to 1 (i.e., greater than 1), it is meant that several phone numbers are searched. In this case, the CPU 52 goes to step 319 to sorts the searched phone numbers in the order of, for example, the dialing frequency or the latest call. For this purpose, each time the telephone calls a phone number, it should store the called phone number together with call information such as the dialing frequency and the call time. This sort process is optional, though it is adopted in the embodiment.

After the sort process, the CPU 52 sets a variable i to 1 in step 320, and displays the variable MATCH_CNT and an i-th phone number among the sorted phone numbers on the display 53, in step 321. Here, the variable i indicates an address of the searched information table 55c where the searched phone numbers are stored. Thereafter, when the user inputs the scroll key to see the next searched phone number, the CPU 52 detects the key input in step 322, and goes to step 323 to increase the variable i by one. After that, the procedure returns to step 321. However, when the user does not input the scroll key, the CPU 52 proceeds to step 317 to check whether the user selects the phone number currently being displayed.

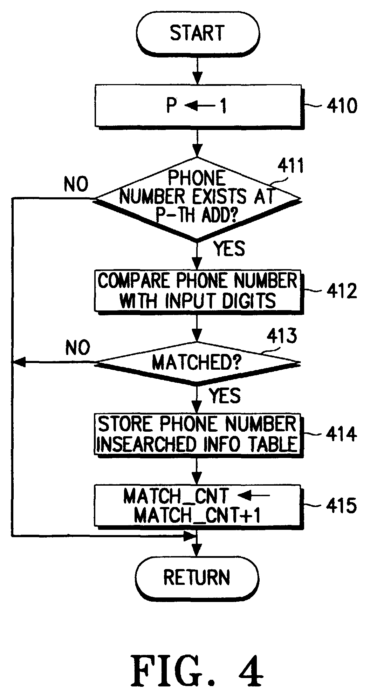

FIG. 4 is a flowchart illustrating the call history table search subroutine (step 312) or the phone number memory search subroutine (step 313) of FIG. 3. In step 410, the CPU 52 sets a variable P to 1. Here, the variable P indicates an address of the call history table 55b or the phone number memory 54. For the call history table 55b of FIG. 2B, the variable P ranges from 1 to 30, and for the table (see FIG. 2A) of the phone number memory 54, the variable P ranges from 1 to 100.

In step 411, the CPU 52 checks whether a phone number is stored at a P-th address of the call history table 55b or the phone number memory 54. If a phone number is stored at the P-th address, the CPU 52 compares the three digits input by the user with the phone number by three digits in step 412. The CPU 52 checks in step 413 whether the phone number has three digits matching with the input three digits. If so, the CPU 52 reads the phone number and stores it in searched information table 55c in step 414, and then increase the variable MATCH_CNT by one in step 415.

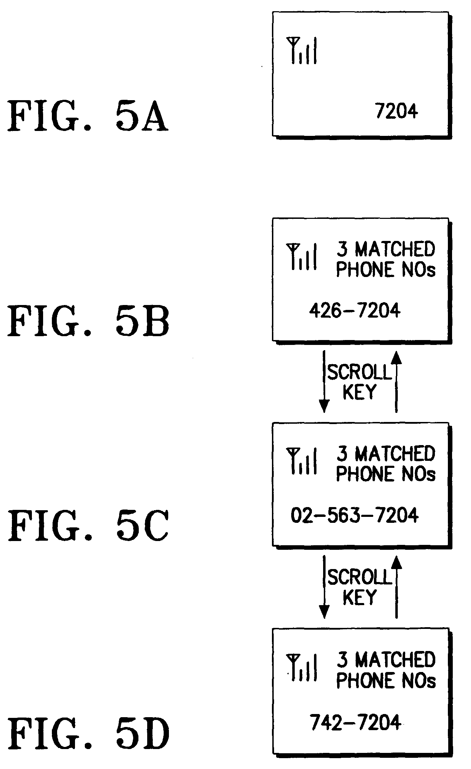

FIGs. 5A to 5D illustrate information about the searched phone numbers displayed on the display 53 according to an embodiment of the present invention. Specifically, FIG. 5A shows a state where the user inputs last four digits "7204" of a phone number to be searched (or dialed). If the telephone has searched three phone numbers with the last four digits "7204", it displays on the display 53 the searched three phone numbers one by one together with a message "three matched phone numbers" according to a scroll key input by the user (see FIGs. 5B to 5D). When the user selects one of the three searched phone numbers of FIGs. 5B to 5D, the selected phone number is automatically dialed.

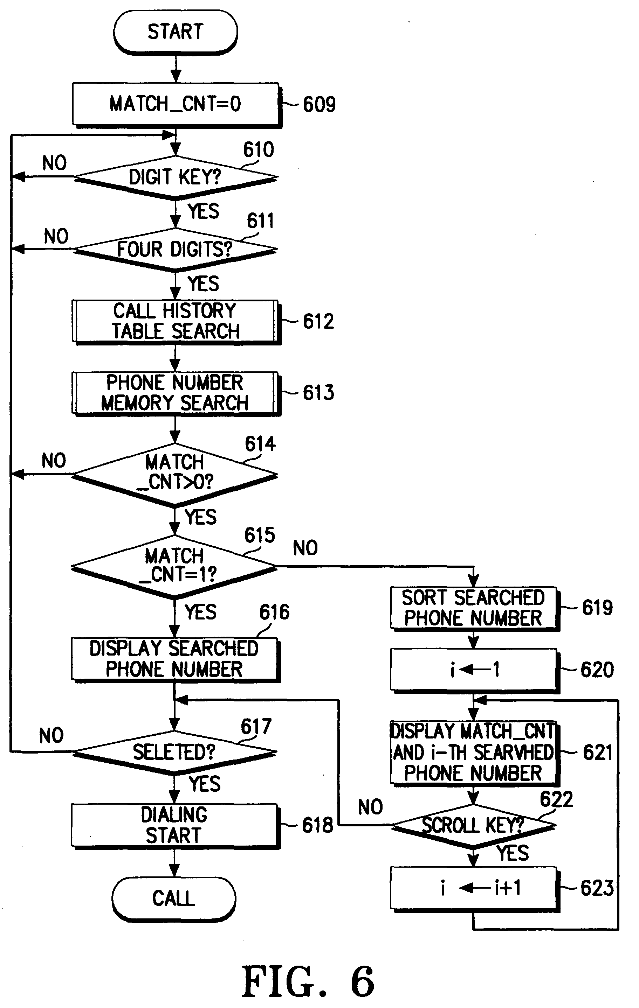

FIG. 6 is a flowchart illustrating a dialing method according to another embodiment of the present invention. The CPU 52 initializes the variable MATCH_CNT to 0 in step 609, and checks in step 610 whether the digit key is input or not. Thereafter, the CPU 52 checks in step 611 whether the last four digits of the phone number to be searched are fully input. If not so, the procedure returns to step 610 until the four digits are fully input. However, if the four digits are fully input, the CPU 52 searches in step 612 the call history table 55b for the phone numbers having four digits matching with the input four digits, and increases the variable MATCH_CNT by one, each time the phone number having the four digits matching with the input four digits is searched. After searching the call history table 55b, the CPU 52 searches in step 613 the phone number memory 54 for phone numbers having four digits matching the input four digits, and increases the variable MATCH_CNT by one, each time the phone number having the four digits matching with the input four digits is searched.

After completion of the search, the CPU 52 checks in step 614 whether the variable MATCH_CNT is larger than 0. If the variable MATCH_CNT is larger than 0, the CPU 52 checks in step 615 whether the variable MATCH_CNT is 1. If so, it is meant that a single phone number is searched. Thus, the CPU 52 displays the searched phone number on the display 53 in step 616. In step 617, the CPU 52 scans the keypad 51 to check whether the user selects the displayed phone number by using a predetermined key in case of the wired telephone or by pressing the SEND key in case of the mobile radio telephone. The CPU 52 then dials the selected phone number in step 618. However, when the variable MATCH_CNT is not greater than 0 in step 614 or when the user does not select the phone number in step 617, the procedure returns to step 610.

In step 615, if the variable MATCH_CNT is not equal to 1, it is meant that several phone numbers are searched. In this case, the CPU 52 goes to step 619 to sorts the searched phone numbers in the order of, for example, the dialing frequency or the latest call.

After the sort process, the CPU 52 sets the variable i to 1 in step 620, and displays the variable MATCH_CNT and an i-th phone number among the sorted phone numbers on the display 53, in step 621. The variable i indicates an address for the searched information table 55c where the searched phone numbers are stored. Thereafter, when the user inputs the scroll key to see the next searched phone number, the CPU 52 detects the key input in step 622, and goes to step 623 to increase the variable i by one. Thereafter, the procedure returns to step 621 However, when the user does not input the scroll key, the CPU 52 proceeds to step 617 to check whether the user selects the phone number currently being displayed.

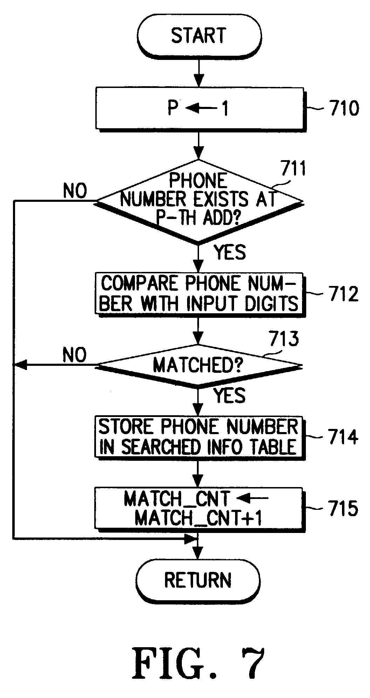

FIG. 7 is a flowchart illustrating the call history table search subroutine (step 612) or the phone number memory search subroutine (step 613) of FIG. 6. In step 710, the CPU 52 sets the variable P to 1. Here, the variable P indicates an address of the call history table 55b or the phone number memory 54. For the call history table 55b of FIG. 2B, the variable ranges from 1 to 30, and for the table (see FIG. 2A) of the phone number memory 54, the variable ranges from 1 to 100.

In step 711, the CPU 52 checks whether a phone number is stored at a P-th address of the call history table 55b or the phone number memory 54. If a phone number is stored at the P-th address, the CPU 52 compares the four digits input by the user with the last four digits of the stored phone number in step 712. The CPU 52 checks in step 713 whether the phone number has the last four digits matching with the input four digits. If so, the CPU 52 reads the phone number and stores it in searched information table 55c in step 714, and then increase the variable MATCH_CNT by one.

As described above, the telephone searches a phone number memory for a desired phone number by inputting only one or more digits of the phone number and then, dialing the searched phone number using a one-touch dial key.

While the present invention has been described in detail with reference to the specific embodiment, it is a mere exemplary application. Thus, it is to be clearly understood that many variations can be made by anyone skilled in the art within the scope and spirit of the present invention.

## Claims

1. A dialing device comprising:
a user interface for inputting digits of a phone number to be dialed, selecting one of searched phone numbers and generating a dial command for dialing the selected phone number;
a memory for storing at least one phone number;
a controller for comparing each of the phone numbers stored in the memory with the input digits to search for the phone numbers having digits matching with the input digits; and
a display for displaying the phone numbers searched by the controller.

2. The device as claimed in claim 1, wherein the user interface comprises:
a plurality of numeric keys for inputting the digits of the phone number to be searched;
a selection key for selecting one of the searched phone numbers and generating the dial command; and
a scroll key for scrolling the searched phone numbers one by one.

3. The device as claimed in claim 1, wherein the controller sorts the searched phone numbers in predetermined order, when two or more phone numbers are searched.

4. The device as claimed in claim 3, wherein the searched phone numbers are sorted in order of a latest call.

5. The device as claimed in claim 3, wherein the searched phone numbers are sorted in order of a dialing frequency.

6. The device as claimed in claim 1, wherein the input digits are two or more consecutive digits of the phone number to be searched.

7. The device as claimed in claim 1, wherein the memory comprises a call history table for storing previously called phone numbers.

8. The device as claimed in claim 7, wherein the memory further comprises a phone number memory for storing phone numbers previously registered by a user.

9. The device as claimed in claim 1, wherein the memory comprises a phone number memory for storing phone numbers previously registered by a user.

10. The device as claimed in claim 7, wherein the memory further comprises a searched information table for temporarily storing the searched phone numbers.

11. The device as claimed in claim 1, wherein the user interface inputs last four digits of the phone number to be searched, wherein the controller compares said input four digits with last four digits of respective phone numbers stored in the memory to search for the phone numbers having the last four digits matching with the input four digits.

12. A dialing method in a telephone having a memory for storing phone numbers and a display, comprising the steps of:
inputting N consecutive digits of a phone number to be searched;
searching the memory for phone numbers having N consecutive digits matching with the input digits;
displaying the searched phone numbers on the display; and
dialing one of the searched phone numbers, being selected through a user interface.

13. The dialing method as claimed in claim 12, further comprising the steps of:
displaying one of the searched phone numbers on the display;
scrolling the searched phone numbers one by one, upon receiving a scroll command input through the user interface; and
dialing the selected phone number upon receipt of a selection command input through the user interface.

14. The dialing method as claimed in claim 12, farther comprising the steps of:
sorting the searched phone numbers in predetermined order; and
displaying one of the sorted phone numbers, scrolling the searched phone numbers one by one in response to a scroll command input from a user interface, and dialing the phone number selected through the user interface.

15. The dialing method as claimed in claim 14, wherein the searched phone numbers are sorted in order of a latest call.

16. The dialing method as claimed in claim 14, wherein the searched phone numbers are sorted in order of a dialing frequency.

17. The dialing method as claimed in claim 12, wherein said N consecutive digits are last four digits of a phone number to be searched.
